# EUROPEAN PATENT APPLICATION

(11) **EP 1 980 940 A2**
(43) Date of publication of application: **15.10.2008**
(21) Application number: 08154429.8
(22) Date of filing: 11.04.2008
(51) Int. Cl.: G06F 3/06

(54) **Memory apparatus to write and read data, and method thereof**

(30) Priority: 11.04.2007 KR 20070035727; 10.04.2008 US 100633
(71) Applicant: Samsung Electronics Co., Ltd., Suwon-si, Gyeonggi-do 442-743 (KR)
(72) Inventor: Lee, Sang-hoon, Gyeonggi-do (KR); Kim, Geun-soo, Gyeonggi-do (KR)
(74) Representative: Grünecker, Kinkeldey, Stockmair & Schwanhäusser Anwaltssozietät

(57) **Abstract**

An apparatus and method of reading and writing data from and on a storage medium include receiving at least one of file information and file data from a host, generating a logical block address corresponding to the one of the file information and the file data, and writing the one of the file information and the file data at the generated logical block address.

## Description

The present general inventive concept relates to an apparatus and method to read and write data from and on a storage medium, and more particularly, to a memory apparatus to write and read data on and from a recording medium, and method to write and read data on and from a recoding medium, and a method thereof.

A file system is a portion of an operation system to assign a name to a file, and to determine a logical location to store or retrieve a file. As an example of the file system is an NT file system (NTFS) of Windows XP, a live file system of Windows Vista, an EXT3 of Linux, etc.

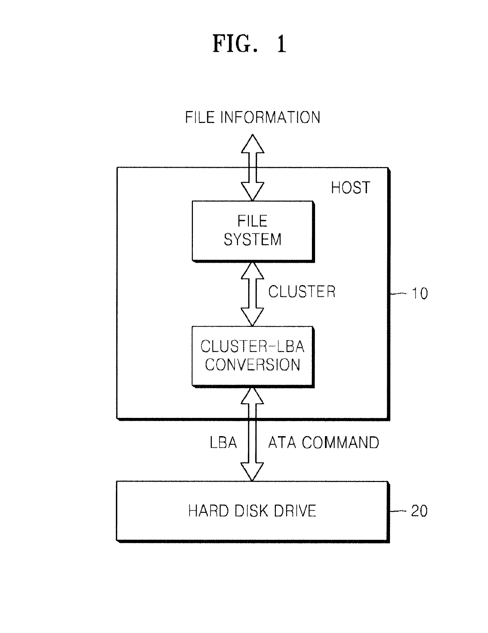

FIG. 1 is a view illustrating a conventional memory apparatus, for example, a conventional hard disk drive 20, connected to a host 10 for data transmission. Referring to FIG. 1, the host 10 is provided with a file system to convert data into a unit of cluster using information on a file route and a file name of the data. The hard disk drive 20 receives a logical block address (LBA) of the data to be written, and performs a data writing and reading operation according to a location corresponding to the address received from the host 10. Here, an interfacing operation for data transmission between the hard disk drive 20 and the host 10 is performed according to advanced technology attachment protocol (ATA protocol).

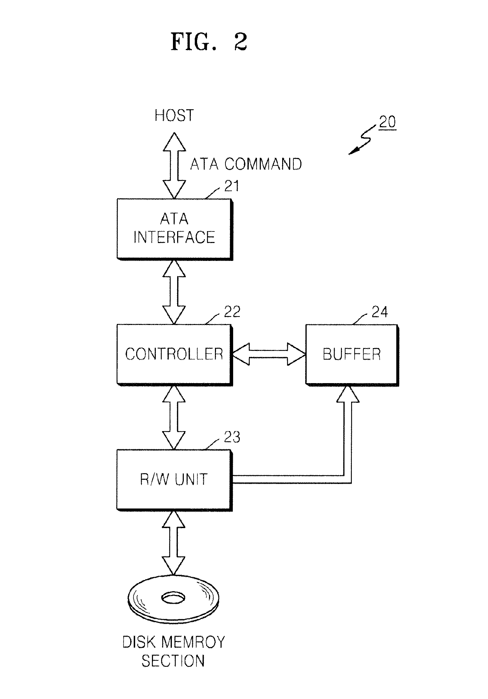

FIG. 2 is a block diagram of the conventional hard disk 20 of FIG. 1.

Referring to FIGS. 1 and 2, the hard disk drive 20 includes an ATA interface 21, a controller 22, a reading/writing unit 23, and a buffer 24. The ATA interface 21 performs an interfacing operation for data transmission between the hard disk apparatus 20 and an operation system and a file system of the host 10 according to a standard of the ATA protocol.

The controller 22 receives a read sector command from the host 10 through the ATA interface 21, analyzes the received read sector command, and determines a starting point of the LBA (starting LBA) and a size of the data to be read according to the analyzed read sector command. In addition, the controller 22 determines whether the data having the starting C_BA and the size is stored in the buffer 27. If the corresponding data is stored in the buffer 27, the controller 22 transmits the stored data of the buffer 27 to the host 10 through the ATA interface 21.

The reading/writing unit 23 performs a reading/writing operation of reading data corresponding to the analyzed starting LBA and size according to a command of the controller 22, and stores the read data in the buffer 27. The buffer 27 temporarily stores the data read from a memory section 25, such as head disk.

Here, in the conventional hard disk drive 20, a file system that is used to format the memory section 25 cannot be used in other file systems. That is, if the host 10 does not support the file system used to format the memory section of the hard disk drive 20 or does not store information on the file system indicating a format of the memory section 25 of the hard disk drive 20, the host 10 cannot access a file stored in the memory section 25 of the hard disk drive 20 or cannot store the file in the memory section 25 of the hard disk drive 20. Furthermore, the hard disk drive 20 cannot analyze the command received from the host 10 to read and write data, and cannot perform the interfacing operation and the reading writing operation. Therefore, it is impossible for the host 10 and the hard disk drive 20 to form a method of reading and writing data using a different file system.

It is the object of the present invention to provide a method of reading and writing data regardless of a file system and to provide a memory apparatus to read and write data regardless of a file system.

This object is solved by the subject matter of the independent claims.

Preferred embodiments are defined in the dependent claims.

According to an aspect of the present invention, there is provided a computer-readable medium to contain computer-readable codes as a program to execute a method of reading and writing data regardless of a file system.

The present general inventive concept provides an apparatus and method of reading and writing data according to a universal filing system.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept may be achieved by providing a system to read and write data in and from a storage medium, including a host to generate a command to read or write data, and a memory apparatus connectable to the host to generate a logical block address and to read or write data according to the logical block data according to the command.

The host may include a terminal, and the memory apparatus may include an interface to be connected to the terminal through which the command and the data are transmitted.

The memory apparatus may be detachably attached to the host.

The memory apparatus may not receive the logical block address from the host to read or write the data.

The memory apparatus may include a disk drive apparatus having a disk as a storage medium, a memory device having a semiconductor as the storage medium, or a solid state drive having a flash memory as the storage medium.

The host may not create the logical block address and transmit the logical block address to read or write data from or in the memory apparatus.

The host may control the memory apparatus to write and read data without transmitting the logical block address to the memory apparatus.

The host may not transmit the logical block address to the memory apparatus and receives status information on the reading or writing operation of the memory apparatus from the memory apparatus.

The memory apparatus may include a plurality of memory apparatuses connectable to the host.

The memory apparatuses may have a same format or type or different formats or types from each other.

The foregoing and/or other aspects and utilities of the present general inventive concept may also be achieved by providing a memory apparatus usable with a system having a host, including a memory section to store data, and a file-logic address converter to generate a logical block address according to a command received from an external host such that the data is written or read in or from the memory section according to the logical block address.

The converter may convert file information received from the host into the logical block address.

The file information may include a file name or a file path.

The memory apparatus may further include a controller to control the memory section to write file data in an area corresponding to the logical block address of the converter or to read the file data from the area corresponding to the logical block address of the converter

The memory apparatus may further include a controller to generate status information on the operation of writing or reading the data according to the logical block address in response to the received command.

The memory apparatus may further include an interface to perform an interface between the converter and the host using an advanced technology attachment (ATA) protocol.

The converter may generate the logical block address according to file information received from the host, and the file information may be transmitted to the inverter through the interface using a smart command transport (SCT) command of an ATA specification of an STA protocol.

The file information may be transmitted through a write log command of the smart command transport (SCT) command.

The interface may receive the data to be written from the host through a write log command of the smart command transport (SCT) command.

The interface may transmit status information of the memory section after the data is written in the memory section according to the SCT command.

The interface may transmit the read data the host using a read log command of the smart command transport (SCT) command.

The interface may transmit status information of the memory section after performing the SCT command received from the host.

The converter may include a file-cluster converting unit to convert file information into a corresponding cluster, and a cluster-logical address converting unit to convert the cluster into the logical block address.

The memory section and the converter may be formed in a single integrated body, and the single integrated body is detachably attached to the host.

The foregoing and/or other aspects and utilities of the present general inventive concept may also be achieved by providing a method of a system to read and write data in and from a storage medium, the method including generating a command from a host to read or write data, and generating in a memory apparatus connectable to the host, a logical block address and to read or write data according to the logical block data according to the command.

The foregoing and/or other aspects and utilities of the present general inventive concept may also be achieved by providing a method of a memory apparatus usable with a system having a host, the method including generating a logical block address according to a command received from an external host in a file-logic address converter, and writing or reading in or from a memory section the data according to the logical block address.

The generating of the logical block address may include converting file information received from the host into the logical block address.

The file information may include a file name or a file path.

The method may further include controlling the memory section to write file data in an area corresponding to the logical block address of the converter or to read the file data from the area corresponding to the logical block address of the converter.

The method may further include generating status information on the operation of writing or reading the data according to the logical block address in response to the received command.

The method may further include performing an interface between the converter and the host using an advanced technology attachment (ATA) protocol.

The generating of the logical block address may include generating the logical block address according to file information received from the host; and transmitting the file information using a smart command transport (SCT) command of an ATA specification of an STA protocol.

The transmitting of the file information may include transmitting the file information through a write log command of the smart command transport (SCT) command.

The method may further include receiving the data to be written from the host through a write log command of the smart command transport (SCT) command.

The method may further include transmitting status information of the memory section after the data is written in the memory section according to the SCT command.

The writing or reading of the data may further include transmitting the read data the host using a read log command of the smart command transport (SCT) command.

The method may further include transmitting status information of the memory section after performing the SCT command received from the host.

The generating of the logical block address may include converting file information into a corresponding cluster; and converting the cluster into the logical block address.

The memory section and the converter may be formed in a single integrated body, and the single integrated body may be detachably attached to the host.

The foregoing and/or other aspects and utilities of the present general inventive concept may also be achieved by providing a computer-readable medium to contain computer-readable codes as a program to execute a method of a system to read and write data in and from a storage medium, the method including generating a command from a host to read or write data, and generating in a memory apparatus connectable to the host, a logical block address and to read or write data according to the logical block data according to the command.

The foregoing and/or other aspects and utilities of the present general inventive concept may also be achieved by providing a computer-readable medium to contain computer-readable codes as a program to execute a method of a memory apparatus usable with a system having a host, the method including generating a logical block address according to a command received from an external host in a file-logic address converter; and writing or reading in or from a memory section the data according to the logical block address.

The object and/or other aspects and utilities of the present general inventive concept will become apparent and more readily appreciated from the following description of the embodiments, taken in conjunction with the accompanying drawings of which:

FIG. 1 is a view illustrating a conventional hard disk drive connected to a host for data transmission;

FIG. 2 is a block diagram illustrating the conventional hard disk drive of FIG. 1:

FIG. 3A is a view illustrating a system having a host and a memory apparatus according to an embodiment of the present general inventive concept.

FIG. 3B is a block diagram illustrating a disk drive apparatus according to an embodiment of the present general inventive concept;

FIG. 4 is a view illustrating a file-logical address converting unit of the disk drive apparatus of FIG. 3;

FIG. 5 is a view illustrating a method of writing data in a disk drive apparatus according to an embodiment of the present general inventive concept;

FIG. 6 is a view illustrating a method of reading data in a disk drive apparatus according to an embodiment of the present general inventive concept;

FIG. 7 is a view illustrating a logical address generating operation of the method of FIGS. 5 and 6;

FIG. 8 is a view illustrating an operation of performing a write log command and a read log command;

FIG. 9 is a view illustrating data writing and reading operations according to an embodiment of the present general inventive concept;

FIG. 10 is a flowchart view illustrating a method of reading and writing data in the system of FIG. 3A; and

FIG. 11 is a view illustrating a system having a host and a plurality of memory apparatuses according to an embodiment of the present general inventive concept.

Reference will now be made in detail to the embodiments of the present general inventive concept, examples of which are illustrated in the accompanying drawings, wherein like reference numerals refer to like elements throughout. The embodiments are described below in order to explain the present general inventive concept by referring the figures.

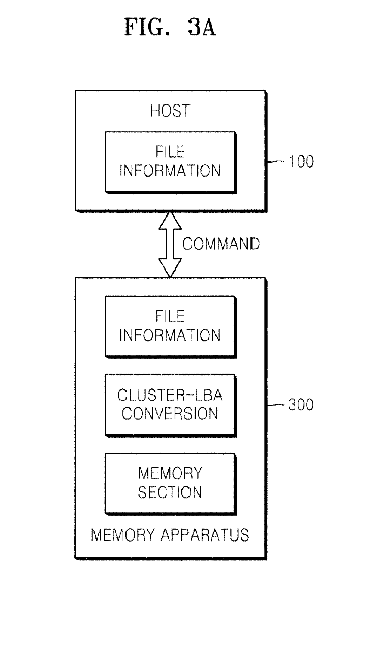

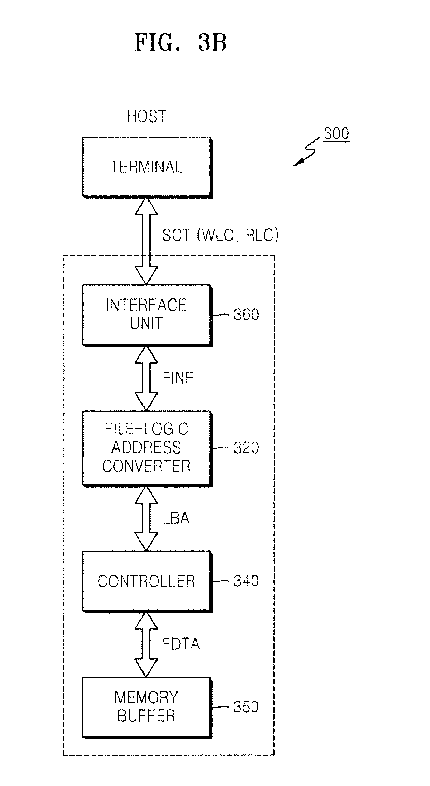

FIG. 3A illustrates a system having a host 100 and a memory apparatus 200 according to an embodiment of the present general inventive concept, and FIG. 3B illustrates a disk drive apparatus 300, as an example of the memory apparatus 200 of FIG. 3A, according to an embodiment of the present general inventive concept.

The host 100 may be a host computer apparatus, a personal computer apparatus, a portable computer apparatus, a mobile communications apparatus, etc., to communicate with the memory apparatus 200 to write and read data. The host may 100 have a terminal, and the memory apparatus 200 can be connected to the terminal to communicate with the host 100. The memory apparatus 200 may be installed in the host 100 or connected to the host through a wired or wireless connection, to perform a method of reading and writing data according to the present general inventive concept.

Here, FIG 3B illustrates the disk drive apparatus 300 as an example of the memory apparatus 200 of FIG. 3A to read and write data according to a method of the present general inventive concept. However, the present general inventive concept is not limited thereto. A different type of the memory apparatuses can be used as the memory apparatus 200. The different type of the memory apparatuses may be an optical disk drive apparatus, a magnetic disk drive apparatus, an electronic apparatus, an electrical circuitry apparatus, a semiconductor memory apparatus, a solid state drive (SSD) apparatus, etc., with a memory section to store data and a controller to control the memory section to perform a reading and writing operation according to a method of the present general inventive concept.

Referring to FIG. 3A, the host 100 may have file information 100a, for example, information on a file route and/or a file name, and may communicate with the memory apparatus 200 to transmit the file information using a command. Here, the file route and the file name of a file can be given by a user and/or an operating system of the host 100.

The memory apparatus 200 receives the file information 200a and/or data of a file from the host 100 and performs a cluster conversion 200b to convert file data of the file information into addresses to correspond to one or more clusters so that the file data can be stored in a memory section 200c according to the addresses of the clusters.

The memory section 200c may be a storage medium, a memory device, an optical disk, a magnetic disk, a semiconductor memory device, a flash memory device, etc. The memory section can have a space or region in which data is written or from which data is erased or read. According to a type of the memory section, the memory apparatus 200 may have an additional device to read and write data on and from the memory section 200c. For example, when the memory section 200c is the magnetic disk, the additional device may be a conventional head unit of a hard disk drive apparatus. When the memory section 200c is the semiconductor memory device, a conventional row/column address unit can be used as the additional device. Since the above additional device is well known, detailed descriptions thereof will be omitted.

Here, the host 100 may not perform the cluster conversion 200b to correspond to a format of the memory section 200c of the memory apparatus 200, may not have information on the format of the memory section 200c of the memory apparatus 200, or may not receive the information on the format of the memory section 200c from the memory apparatus 200. The memory section 200c may have its own format to store data thereon, and the memory apparatus 200 may have a different format from other memory apparatuses. According to a type of the memory section 200c or the memory apparatus 200, the format is determined and used in the memory apparatus 200, and the format is not a factor for the host 100 to communicate with the memory apparatus 200 to transmit data or to read or write data.

Referring to FIG. 3B, the hard disk drive apparatus 300 may include a file-logic address converter 320, a controller 340, and a memory section 350.

The memory section 350 may have a hard disk and a magnetic head unit to write and read data on and from the hard disk.

The file-logic address converter 320 receives file information FINF from a host and converts the file information FINF into one or more addresses, such as logic block addresses (LBA).

The controller 340 writes file data FDTA at a location of the memory section 350 corresponding to the LBA and/or reads out the file data FDTA from a location of the memory section 350 corresponding to the LBA. The file data FDTA may be transmitted from the host to the hard disk drive apparatus 300 to be stored in the memory section 350 according to the LBA, and the file DATA FDTA may be read from the memory section 350 according to the LBA to be transmitted to the host.

The controller 340 has information on a format of the memory section 350, a method of writing and reading data on or from the memory section 350, a map of data area of the memory section 350, etc., and controls the file-logic address converter 320 to create the LBA according to the information and controls the memory section 350 to write and read in and from the memory section 350 according to the LBA of the file-logic address converter 320.

The controller 340 may have information on a plurality of formats to select one of the formats to correspond to a format of the memory section 350, may control the file-logic address converter 320 to create the LBA according to the information and may control the memory section 350 to write and read in and from the memory section 350 according to the LBA of the file-logic address converter 320.

The hard disk drive apparatus 300 may further include an interface 360 according to the embodiment of the present general inventive concept. The interface 360 may perform an interfacing operation with the host according to a command or a protocol, for example, an advanced technology attachment (ATA) protocol. A smart command transport (SCT) command of an advanced technology attachment (ATA) specification can be used as a command between the host and the hard disk drive apparatus 300.

The host may 100 have a terminal formed on a main body of the host 100 or formed on a receiving unit of the host to accommodate the memory apparatus 200, and the memory apparatus 200 can be connected to the terminal of the host 100 to communicate with the host 100 through the interface 360.

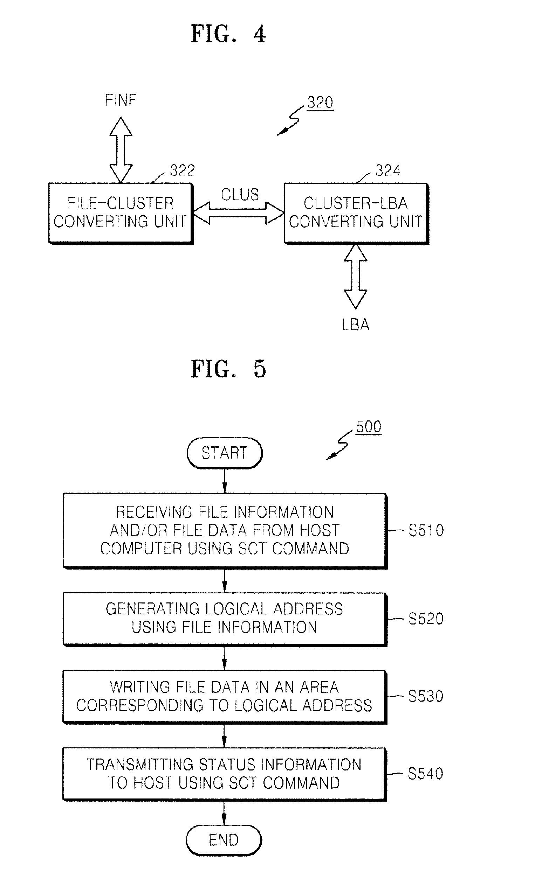

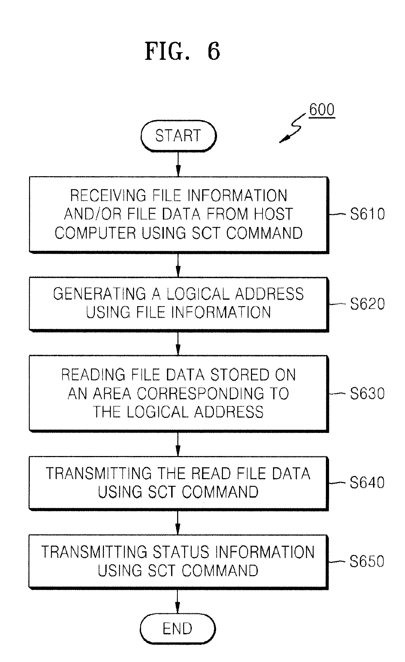

FIG. 5 illustrates a method 500 of writing data in a system having a host and a memory apparatus according to an embodiment of the present general inventive concept, and FIG. 6 illustrate a method 600 of reading data in a system according to an embodiment of the present general inventive concept. The methods 500 and 600 may be performed in the memory apparatus of the system.

Referring to FIGS. 5 and 6, the methods 500 and/or 600 of the system may include receiving from file information and/or file data from a host using a SCT command at operation S510 or S61 0, generating one or more logical addresses of the file data, such as the LBA, using the file information at operation S520 or S620, and writing the file data at a location corresponding to the logical addresses at operation S530 or reading the file data from the location corresponding to the logical addresses at operation S630. The methods 500 and 600 further include transmitting status information on the reading or writing of the file data from or in a memory section from the memory apparatus to the host according to the SCT command at operation S540 and S650. The method 600 may further include transmitting the read file data from the memory apparatus to the host using the SCT command at operation 640.

The methods 500 and 600 of writing and/or reading the file data according to the present embodiment will be explained in more detail with reference with FIGS. 3, 5, and 6.

Referring to FIGS. 3, 5 and 6, the hard disk drive apparatus 300 receives the file information (FINF) using a command, such as a smart command transport (SCT) command of an advanced technology attachment (ATA) specification at operation S51 0 and 610. The file-logical address converter 320 generates the one or more logical addresses to correspond to the file data according to the file information FINF at operation S520 and S620.

Here, the file information FINF may be information to provide an interface between a user and a system, such as a data storage system, when a user stores a file in a memory section and/or retrieves a file from a memory section. The file information FINF may include a file name, a file path (route), etc.

As described above, the host (HOST) and the hard disk drive apparatus 300 are interfaced by the ATA protocol. According to the present embodiment, in the methods 500 and 600 of writing and reading data in the hard disk drive apparatus 300, since the file information FINF is transmitted using the SCT command, the hard disk drive apparatus 300 can receive the file name and/or the file path (route) that are used for the file-logical address conversion.

The SCT command may be a command which is not defined in the ATA specification, that is, a tag of a predetermined one or more bits attached or added to a defined command of the ATA specification to define a command to be formed by a user.
The SCT command can include the file information FINF.

In the methods 500 and 600 of writing and reading data in the hard disk drive apparatus 300, the file information FINF) and the file data FDAT are transmitted and received between the host HOT and the hard disk drive apparatus 200 using a write log command (WLC) and/or a read log command (RLC).

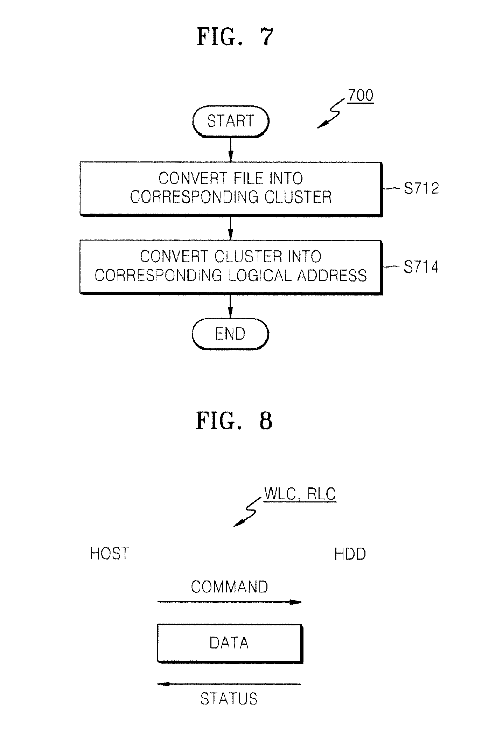

FIG. 8 is a view illustrating an operation of performing communication using a command, such as a write log command WLC and a read log command RLC, and status information STATUS between a host and a memory apparatus.

Referring to FIG. 8, the host HOST transmits a corresponding command to the memory apparatus using the WLC or RLC. Here, data to perform the corresponding command may be transmitted together with the WLC or RLC. When the memory apparatus performs operations to correspond to the corresponding command, the memory apparatus transmits the result to the host HOST as status information STATUS of the memory apparatus.

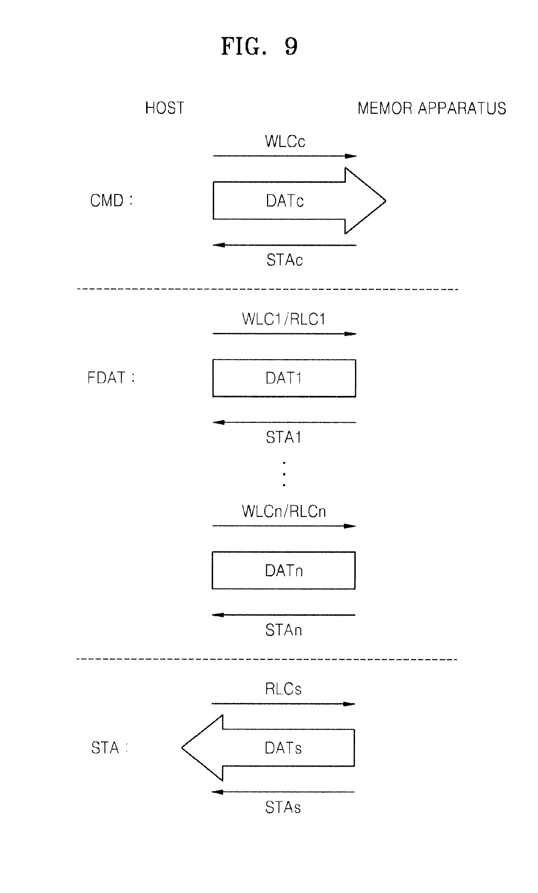

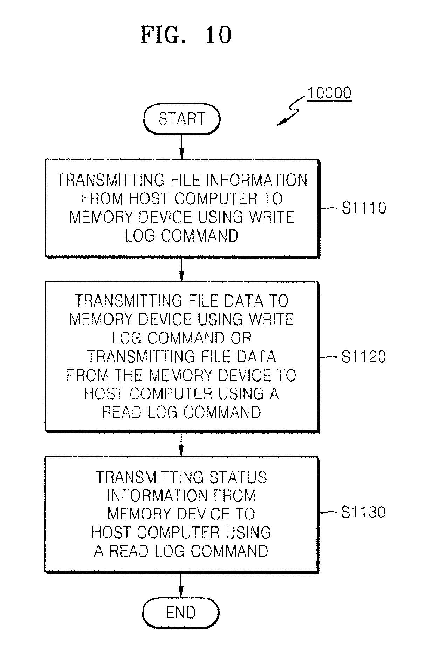

As described above, one of the WLC and RLC is performed according to the methods 500 and 600. A transmitting operation of the file information and the file data using the SCT command will be explained in more detail with reference to FIGS. 9 and 10.

FIG. 9 illustrates data writing and reading operations in a system according to an embodiment of the present general inventive concept. The system may be a system illustrated in FIG. 3A to include a host and a memory apparatus.

Referring to FIG. 9, in a command process CMD of the system, the host transmits a mapping command WLCc to the memory apparatus. Data DATc corresponding to the file information FINF can be transmitted from the host to the memory apparatus separately or simultaneously from or with the mapping command WLCc. An arrow of the data DATc includes an end to indicate a direction in which the data DATc is transmitted. The memory apparatus receives the mapping command WLCc, controls a memory section to perform a mapping operation to correspond to a mapping of data to be written or read from the memory section according to the mapping command WLCc, and transmits status STAc to the host HOST as information on a result of the mapping of the memory section according to the mapping command WLCc. When the memory section has been mapped, the memory apparatus does not have to perform the mapping operation, and transmits information on the mapped memory section or a format of the memory section to the host as the status STAc.

In a process FDAT of writing and reading data in the system, that is, in a process in which the file data is written or stored in the memory apparatus, the host HOST transmits to the memory apparatus one or more write commands WLC1, WLC2, ...., WLCn, using the write log command WLC. At this time, the file data DAT1, DAT2, ..., DATn can be transmitted separately or simultaneously together with the write commands WLC1, WLC2, ...., WLCn. The memory apparatus writes the file data DAT1, DAT2, ..., DATn on the memory section, such as a disk or a semiconductor memory device, and transmits results STA1, STA2, ..., STAn to represent the writing operations of writing the file data DAT1, DAT2, ..., DATn, to the host HOST.

In the process FDAT of writing and reading data in or from the memory apparatus of the system, that is, in a process in which the file data is read out from the memory apparatus, the host HOST transmits to the memory apparatus one or more read commands RLC1, RLC2, ...., RLCn, using the read log command RLC. The memory apparatus reads the file data DAT1, DAT2, ... , DATn from the memory section and transmits the read file data DAT1, DAT2, ..., DATn to the host HOST. When the memory apparatus transmits the read file data DAT1, DAT2, ..., DATn of the memory section, the memory apparatus transmits the results STA1, STA2, ..., STAn to represent the reading operations of reading the file data DAT1, DAT2, ... , DATn, to the host HOST.

In a status process STA of transmitting status information of the writing and/or reading operation of the memory apparatus, that is, a process in which the host HOST communicates with the memory apparatus regarding status of the writing and/or reading operation, the host HOST transmits status information request command RLCs to the memory apparatus. The memory apparatus receives the status information request command RLCs, and transmits data DATS corresponding to the status information request command RLCs to the host HOST, and transmits the result STAs to correspond to the status information request command RLCs to the host HOST.

As described above, the operation of writing and/or reading data is performed using the SCT command according to the present embodiment. The operation of converting the file information into the logical address can be performed in the memory apparatus. The operation of converting the file information into the logical address will be explained in more detail.

FIG. 10 illustrates a method of the system of FIG. 3A according to an embodiment of the present general inventive concept. Referring to FIGS. 3A and 10, the method includes transmitting file information from the host 100 to the memory apparatus 200 using a write log command at operation S1001, transmitting file data from the host 100 to the memory apparatus 200 using a write log command or transmitting file data from the memory apparatus 200 to the host 100 using a read log command at operation S1002, and transmitting status information from the memory apparatus 200 to the host 100 using a read log command at operation S1003

FIG. 4 illustrates the file-logical address converting unit 320 of the hard disk drive apparatus of FIG. 3, and FIG. 7 illustrates a logical address generating operations S520 and S620 of the methods 500 and 600 of FIGS. 5 and 6 to be performed in the file-logical address converting unit 320 of FIG. 4.

Referring to FIGS. 4 and 7, the file-logical address converter 340 of FIG. 3 may include a file- cluster converting unit 322 and a cluster-LBA converting unit 324. The file-cluster converting unit 322 converts the file information FINF into a corresponding cluster CLUS at operation S712. The file- cluster converting unit 322 may perform the file-cluster converting operation according to a file system which may include information on a format or a type of a memory section to correspond to an address system to assign addresses to data to be written or read from or in the memory section.

The cluster-LBA converting unit 324 converts the cluster CLUS into a logical block address (LBA) as a logical address at operation S714. Here, since the cluster CLUS is a combination of a plurality of logical addresses, the cluster-LBA converting unit 324 may be provided (realized) with a mapping table to correspond to mapping of a memory space or area of data to be written or read.

As described above, the hard disk drive apparatus 300 and the methods S500 and S600 of writing and reading data can be included and/or performed in an electronic apparatus having a file system to generate the LBA from the file information FINF. The present embodiment can solve a problem in that a conventional hard disk drive 10 of FIG. 1 does not write and read the data according to a file system of the host which the conventional hard disk drive 10 does not support. That is, a conventional hard disk drive can write and read (retrieve) a file received from a host, using the above-described function of hard disk drive apparatus 300 and the methods S500 and S600, and also in that a conventional host of FIG. 1 does not write and read the data in and from a conventional hard disk drive according to a file system of the hard disk drive which the conventional host does not support. However, the memory apparatus according to the present general inventive concept can write and read (retrieve) a file received from a host regardless of a file system of the host or the memory apparatus.

As described above, the hard disk drive apparatus 300 and the methods S500 and S600 can write and read (retrieve) a file or data on or from a storage medium regardless of a file system. The hard disk drive apparatus 300 and the methods S500 and S600 can be performed in hosts having different file systems without changing host systems of the hosts, thereby enabling the hosts to communicate with a single hard disk drive apparatus to write and read a file or data and reducing costs for writing and reading the file and data in and from a storage medium.

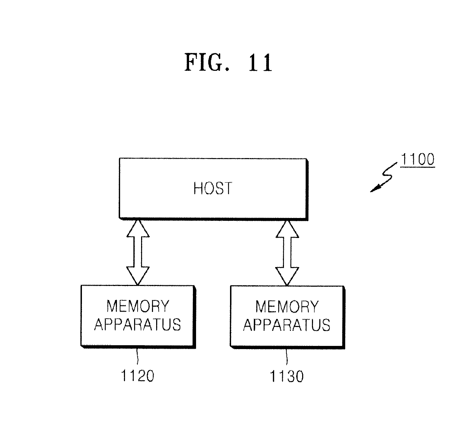

FIG. 11 illustrates a system 1100 having a host 1110 and a plurality of memory apparatuses 1120 and 1130. Although FIG. 11 illustrates the two memory apparatuses 1120 and 1130, the present general inventive concept is not limited thereto. Three or more memory apparatuses can be used in the system 1100 to communicate with the host 1110.

The memory apparatus 1120 may be a first memory apparatus and the memory apparatus 1130 may a second memory apparatus. The first and second memory apparatus may have a same structure and function or different structures and functions to write and read in or from a memory section according to the above-described system and method. For example, the first and second memory apparatuses may be a hard disk drive apparatus or a SSD, and the first and second memory apparatuses may be a hard disk drive apparatus and a SSD, respectively.

Since the host 1110 does not support or use information on a first data format of the first memory apparatus and a second data format of the second memory apparatus to generate the LBA, the host 1110 can store data in any one of the first and second memory apparatuses regardless of the first format and the second data formats, and can read data from the first memory apparatus and can store or write the read data of the first memory apparatus in the second memory apparatus regardless of the first format and the second format.

The first memory apparatus and the second memory apparatus can be used regardless of a determination of whether the host 1110 supports or uses the information on the format of the memory apparatus.

The present embodiment illustrated in the drawings and descriptions is an example of the present general inventive concept. The present general inventive concept is not limited thereto. Since other changes can be made in the present general inventive concept, the present general inventive concept is not limited to structure or arrangement of the particular elements of the present embodiments. The present general inventive concept may be embodied as a hard disk drive apparatus and a data storage apparatus as describe above.

The present embodiment can be realized or performed as a method, an apparatus, or a system. When the present general inventive concept is embodied using software, elements of the present general inventive concept may be code segments to perform the method. Programs or code segments can be stored in a medium to be readable by a processor (computer), and/or can be transmitted by a computer data signal combined with a carrier in a communication network. The processor-readable medium may include any medium to store or transmit information data corresponding to the code segments. An example of the processor-readable medium is an electronic circuit, a semiconductor memory device, a ROM, a flash memory, an erasable ROM (EROM), a floppy disk, an optical disk, a hard disk, an optical fiber medium, a radio frequency (RF) network, etc. The computer data signal may be a signal transmittable through a transmission medium, such as an electronic network channel, an optical fiber, air, an electromagnetic field, an RF network, etc.

As described above, an operation of writing and/or reading data is performed using the SCT command according to the present embodiment, and an operation of converting file information into logical addresses can be performed in the memory apparatus.

As described above, a host can read and write in and from a memory apparatus regardless of a format or a type of a memory section of the memory apparatus.

As described above, a host can read and write in and from a plurality of memory apparatuses regardless of formats or types of memory sections of the memory apparatuses.

As described above, a host does not have to support a format or type of a memory section of a memory apparatus to read and write in or from the memory section of the memory apparatus.

As described above, a host can perform a universe reading and writing operation to read and write data in and from a memory section of the memory apparatus regardless of predetermined or pre-stored information on the type or format of the memory apparatus.

Although a few embodiments of the present general inventive concept have been shown and described, it will be appreciated by those skilled in the art that changes may be made in these embodiments without departing from the scope of the present invention, which is defined in the appended claims.

## Claims

1. A system to read and write data in and from a storage medium, comprising:
a host to generate a command to read or write data; and
a memory apparatus connectable to the host to generate a logical block address and to read or write data according to the logical block data according to the command.

2. The system of claim 1, wherein the host comprises a terminal, and the memory apparatus comprises an interface to be connected to the terminal through which the command and the data are transmitted.

3. The system of claim 1 or 2, wherein the memory apparatus is detachably attached to the host.

4. The system of claim 1 or 2, wherein the memory apparatus does not receive the logical block address from the host to read or write the data.

5. The system of claim 1 or 2, wherein the memory apparatus comprises a disk drive apparatus having a disk as a storage medium, a memory device having a semiconductor as the storage medium, or a solid state drive having a flash memory as the storage medium.

6. The system of claim 1 or 2, wherein the host does not create the logical block address and transmit the logical block address to read or write data from or in the memory apparatus.

7. The system of one of claims 1 to 6, wherein the host is adapted to control the memory apparatus to write and read data without transmitting the logical block address to the memory apparatus.

8. The system of claim 1 or 2, wherein the host does not transmit the logical block address to the memory apparatus and receives status information on the reading or writing operation of the memory apparatus from the memory apparatus.

9. The system of one of claims 1 to 8, wherein the memory apparatus comprises a plurality of memory apparatuses connectable to the host.

10. The system of claim 9, wherein the memory apparatuses have a same format or type or different formats or types from each other.

11. A memory apparatus usable with a system having a host, comprising:
a memory section to store data; and
a file-logic address converter to generate a logical block address according to a command received from an external host such that the data is written or read in or from the memory section according to the logical block address.

12. The memory apparatus of claim 11, wherein the converter is adapted to convert file information received from the host into the logical block address.

13. The memory apparatus of claim 12 wherein the file information comprises a file name or a file path.

14. The memory apparatus of claim 11, further comprising:
a controller to control the memory section to write file data in an area corresponding to the logical block address of the converter or to read the file data from the area corresponding to the logical block address of the converter.

15. The memory apparatus of one of claims 11 to 14, further comprising:
a controller to generate status information on the operation of writing or reading the data according to the logical block address in response to the received command.

16. The memory apparatus of claim 11, further comprising:
an interface to perform an interface between the converter and the host using an advanced technology attachment, ATA, protocol.

17. The memory apparatus of claim 16, wherein:
the converter is adapted to generate the logical block address according to file information received from the host; and
the file information is transmitted to the inverter through the interface using a smart command transport, SCT, command of an ATA specification of an STA protocol.

18. The memory apparatus of claim 17, wherein the file information is transmitted through a write log command of the smart command transport, SCT, command.

19. The memory apparatus of claim 18, wherein the interface is adapted to receive the data to be written from the host through a write log command of the smart command transport SCT, command.

20. The memory apparatus of claim 19, wherein the interface is further adapted to transmit status information of the memory section after the data is written in the memory section according to the SCT command.

21. The memory apparatus of claim 17, wherein the interface is adapted to transmit the read data the host using a read log command of the smart command transport, SCT, command.

22. The memory apparatus of claim 21, wherein the interface is further adapted to transmit status information of the memory section after performing the SCT command received from the host.

23. The memory apparatus of one of claims 11 to 22, wherein the converter comprises:
a file-cluster converting unit to convert file information into a corresponding cluster; and
a cluster-logical address converting unit to convert the cluster into the logical block address.

24. The memory apparatus of claim 11, wherein the memory section and the converter are formed in a single integrated body, and the single integrated body is detachably attached to the host.

25. A method of a system to read and write data in and from a storage medium, the method comprising:
generating a command from a host to read or write data; and
generating in a memory apparatus connectable to the host, a logical block address and to read or write data according to the logical block data according to the command.

26. A method of a memory apparatus usable with a system having a host, the method comprising:
generating a logical block address according to a command received from an external host in a file-logic address converter; and
writing or reading in or from a memory section the data according to the logical block address.

27. The method of claim 26, wherein the generating of the logical block address comprises converting file information received from the host into the logical block address.

28. The method of claim 27, wherein the file information comprises a file name or a file path.

29. The method of one of claims 26 to 28, further comprising:
controlling the memory section to write file data in an area corresponding to the logical block address of the converter or to read the file data from the area corresponding to the logical block address of the converter.

30. The method of one of claims 26 to 29, further comprising:
generating status information on the operation of writing or reading the data according to the logical block address in response to the received command.

31. The method of one of claims 26 to 30, further comprising:
performing an interface between the converter and the host using an advanced technology attachment, ATA, protocol.

32. The method of one of claims 26 to 31, wherein the generating of the logical block address comprises:
generating the logical block address according to file information received from the host; and
transmitting the file information using a smart command transport, SCT, command of an ATA specification of an STA protocol.

33. The method of claim 32, wherein the transmitting of the file information comprises transmitting the file information through a write log command of the smart command transport, SCT, command.

34. The method of claim 33, further comprising:
receiving the data to be written from the host through a write log command of the smart command transport, SCT, command.

35. The method of claim 34, further comprising:
transmitting status information of the memory section after the data is written in the memory section according to the SCT command.

36. The method of claim 26, wherein the writing or reading of the data comprises transmitting the read data the host using a read log command of the smart command transport, SCT, command.

37. The method of claim 36, further comprising:
transmitting status information of the memory section after performing the SCT command received from the host.

38. The method of one of claims 26 to 37, wherein the generating of the logical block address comprises:
converting file information into a corresponding cluster; and
converting the cluster into the logical block address.

39. The method of one of claims 26 to 38, wherein the memory section and the converter are formed in a single integrated body, and the single integrated body is detachably attached to the host.

40. A computer-readable medium to contain computer-readable codes as a program to execute a method of a system to read and write data in and from a storage medium, the method comprising:
generating a command from a host to read or write data; and
generating in a memory apparatus connectable to the host, a logical block address and to read or write data according to the logical block data according to the command.

41. A computer-readable medium to contain computer-readable codes as a program to execute a method of a memory apparatus usable with a system having a host, the method comprising:
generating a logical block address according to a command received from an external host in a file-logic address converter; and
writing or reading in or from a memory section the data according to the logical block address.
